# EUROPEAN PATENT APPLICATION

(11) **EP 2 624 226 A2**
(43) Date of publication of application: **07.08.2013**
(21) Application number: 13153316.8
(22) Date of filing: 30.01.2013
(51) Int. Cl.: G07F 17/32

(54) **Electronic gaming machine monitor with universal gaming adaptor capabilities**

(30) Priority: 03.02.2012 US 201213366087
(71) Applicant: IGT, Reno, Nevada 89521-8986 (US)
(72) Inventor: Hurley, John J., Reno, NV 89523 (US)
(74) Representative: Cerbaro, Elena

(57) **Abstract**

A video monitor for use in a gaming machine capable of presenting a service window providing user interactive content from a casino or other operator. The video monitor includes a chassis at least partially enclosing a display device and video mixing circuitry. The video mixing circuitry receives inputs from two video sources and instructions. The first video source is gaming machine video and the second video source is service window video. The video mixing circuitry produces a mixed video output that includes the two video sources in windows in accordance with instructions in a first format. The mixed video output is send to the display device in the first format and without conversion to another format.

## Description

### TECHNICAL FIELD

The present disclosure relates generally to wager-based gaming machines and systems, and more specifically to the presentation of video data and the receipt of user input at wager-based gaming machines

### BACKGROUND

Casinos and other forms of gaming comprise a growing multi-billion dollar industry both domestically and abroad, with electronic and microprocessor based gaming machines being more popular than ever. A gaming entity that provides gaming services may control gaming devices that are globally distributed in many different types of establishments. For example, gaming machines may be placed in casinos, convenience stores, racetracks, supermarkets, bars and boats. Further, via a remote server, a gaming entity may provide gaming services in a locale of a user's choosing, such as on a home computer or on a mobile device carried by the user.

Electronic and microprocessor based gaming machines can include various hardware and software components to provide a wide variety of game types and game playing capabilities, with such hardware and software components being generally well known in the art. For example, bill validators, coin acceptors, card readers, keypads, buttons, levers, touch screens, displays, coin hoppers, player tracking units and the like are examples of hardware that can be coupled to a gaming machine. Software components can include software for operating a wager game such as boot and initialization routines, various game play programs and subroutines, credit and payout routines, image and audio generation programs, security monitoring programs, authentication programs and a random number generator, among others.

A gaming entity may provide gaming services to tens of thousands of users. For instance, a single land-based casino may include thousands of gaming machines. Player's gaming interests are constantly changing and the effort associated with providing fresh content to users is quite costly. The ability of a casino operator to maximize their operating profits and keep their customers happy is directly linked to their ability to provide new and desirable gaming content. In view of the above, it would be desirable to provide gaming apparatus and methods that reduce the costs associated with providing new gaming content on gaming devices.

### SUMMARY

Various embodiments described or referenced herein are directed to gaming machines and methods implementing and using techniques for providing a video monitor for use in a gaming machine capable of presenting a service window and a gaming window a display device of the gaming machine.

In some implementations, a video monitor for use in a gaming machine provides user interactive content from a casino or other operator. The video monitor includes a chassis at least partially enclosing a display device, a service window video input, a gaming window video input, a peripheral interface, and one or more microprocessors. The display device includes a receiver configured to receive a video signal in a first format. The service window video input is configured to receive a gaming window video signal that includes display data for a service window from an external computing device. The gaming window video input is configured to receive a gaming window video signal that includes display data from the gaming machine. The peripheral interface is communicatively coupled with the computing device and configured to receive instructions providing for the creation of a third video signal. The third video signal including display data for the service window, the gaming window, or a combination of the service window and the gaming window. The one or more microprocessors are configured to receive the service widow video signal, receive the gaming window video signal, and to receive the service window instructions. The one or more microprocessors are further configured to create the third video signal in the first format and to send the third video signal to the receiver of the display device without converting the third video signal in a second format.

In some implementations, the chassis of the video monitor at least partially encloses a service window audio input, a gaming window audio input, and an audio output. The service window video input is configured to receive a service window audio signal from the computing device. The service window audio signal includes service window audio. The gaming window audio input is configured to receive a gaming window audio signal from the gaming machine. The gaming window audio signal includes gaming window audio. The one or more microprocessors of the video monitor are further configured to: receive the service window audio signal from receive the service window audio signal from the service window audio input; receive the gaming window audio signal from the gaming window audio input; receive the service window instructions via the peripheral interface from the computing device providing for the creation of a third audio signal, the third audio signal including the service window audio, the gaming window audio, or a mixed combination of both; create the third audio signal based on the service window instructions; and send the third audio signal to an audio device via the audio output.

In some implementations, the chassis of the video monitor further at least partially encloses a service switch input. The service switch input is communicatively connected with an input device on the gaming machine. The one or more microprocessors are communicatively connected with the service switch input and configured to receive service switch instructions from the service switch input and send the service switch instructions to the computing device via the peripheral interface.

In some implementations, the display device includes a touch screen. The chassis further at least partially encloses a touch screen output communicatively coupled with the gaming machine and the computing device. The one or more processors are communicatively coupled with the touch screen and further configured to: receive touch screen data from the touch screen; determine whether the touch screen data corresponds with the service window or the gaming window; responsive to determining that the touch screen data corresponds with the service window, send the touch screen data to the computing device via the touch screen output; and responsive to determining that the touch screen data corresponds with the gaming window, send the touch screen data to the gaming machine via the touch screen output.

In some implementations, the peripheral interface may utilize a standard communication protocol; the service window instructions or server switch instructions may indicate the opening, closing, creating, destroying, resizing, or moving of the service window; the one or more microprocessors are further configured to convert the service window video signal or the gaming window video signal into a format suitable for creating the third video signal; the service window input is configured to receive the service window video signal from the computing device utilizing a first wire harness, the gaming window video input is configured to receive the gaming window video signal from the gaming machine utilizing a second wire harness, and the third video signal is sent to the display device without utilizing a wire harness.

In some implementations, the computing device is located within the gaming machine and includes a service window microprocessor configured to receive service window data from a remote host. The service window data includes content for a service window and service window instructions. The service window microprocessor is configured to create a service window video signal based on the content for the service window and send the service window video signal and the service window instructions to the video monitor. The service window video signal includes display data for the service window.

In some implementations, a system provides gaming machines with service window capabilities. The system includes a host device configured to provide content for a service window and a gaming machine.

In some implementations, a method provides for presenting a service window providing user interactive content from a casino or other operator utilizing a chassis at least partially enclosing: a display device including a receiver configured to receive a video signal in a first format, a service window video input configured to receive a service window video signal including display data for a service window from a computing device, a gaming window video input configured to receive a gaming window video signal including display data for a gaming window from a gaming machine, a peripheral interface communicatively coupled with the computing device, and one or more microprocessors. The method comprises: receiving at the one or more microprocessors the service window video signal from the first video input; receiving at the one or more microprocessors the gaming window video signal from the second video input; receiving at the one or more microprocessors service window instructions via the peripheral interface from the computing device, the service window instructions providing for the creation of a third video signal, the third video signal including the service window, the gaming window, or a combination of the service window and the gaming window; creating the third video signal based on the service window instructions, wherein the third video signal is in the first format; and sending the third video signal to the display device via the receiver without converting the third video signal into a second format.

Various implementations may be implemented by networked gaming machines, game servers and other such devices. These and other features and benefits of aspects of the invention will be described in more detail below with reference to the associated drawings. In addition, other methods, features and advantages of the invention will be or will become apparent to one with skill in the art upon examination of the following figures and detailed description. It is intended that all such additional methods, features and advantages be included within this description, be within the scope of the invention, and be protected by the accompanying claims.

### BRIEF DESCRIPTION OF THE DRAWINGS

The included drawings are for illustrative purposes and serve only to provide examples of possible structures and process steps for the disclosed inventive systems, methods, and apparatuses for the disclosed subject matter. These drawings in no way limit any changes in form and detail that may be made to implementations by one skilled in the art without departing from the spirit and scope of the disclosure.

Fig. 1 shows an example of a system including a video monitor 105, configured in accordance with some implementations.

Fig. 2 shows an example of a display screen 200 including a service window and a gaming window, in accordance with some implementations.

Fig. 3 shows an example of a gaming machine 300, configured in accordance with some implementations.

Fig. 4 shows an example of conventional gaming machine architecture 400, configured in accordance with some implementations.

Figs. 5, 6A and 6b show perspective diagrams of an example of a gaming machine, configured in accordance with some implementations.

Fig. 7 shows a server-based gaming network, configured in accordance with some implementations.

### DETAILED DESCRIPTION

Although the following text sets forth a detailed description of numerous different embodiments, it should be understood that the legal scope of the invention is defined by the words of the claims set forth at the end of this patent. The detailed description is to be construed as an example only and does not describe every possible embodiment since describing every possible embodiment would be impractical, if not impossible. Numerous alternative embodiments may be implemented, using either current technology or technology developed after the filing date of this patent, which would still fall within the scope of the claims defining the invention.

It should also be understood that, unless a term is expressly defined in this patent using the sentence "As used herein, the term '______' is hereby defined to mean..." or a similar sentence, there is no intent to limit the meaning of that term, either expressly or by implication, beyond its plain or ordinary meaning, and such term should not be interpreted to be limited in scope based on any statement made in any section of this patent (other than the language of the claims). To the extent that any term recited in the claims at the end of this patent is referred to in this patent in a manner consistent with a single meaning, that is done for sake of clarity only so as to not confuse the reader, and it is not intended that such claim term by limited, by implication or otherwise, to that single meaning. Finally, unless a claim element is defined by reciting the word "means" and a function without the recital of any structure, it is not intended that the scope of any claim element be interpreted based on the application of 35 U.S.C. § 112, sixth paragraph.

Although the present invention is directed primarily to gaming machines and systems, it is worth noting that some of the apparatuses, systems and methods disclosed herein might be adaptable for use in other types of devices, systems or environments, as applicable, such that their use is not restricted exclusively to gaming machines and contexts. Such other adaptations may become readily apparent upon review of the inventive apparatuses, systems and methods illustrated and discussed herein.

A Universal Game Adapter (UGA) was announced by International Game Technology (IGT) of Reno, Nevada in June 2011. The UGA provides an open standards-based video adapter as a safe add-on to existing gaming machines. The UGA delivers service window functionality on the existing gaming machines. A service window may provide information and services such as player tracking account data, service request interfaces, food and beverage ordering interfaces, side games, or advertisements. Importantly, the UGA does not require any unauthorized reconfiguration or rewiring of the original design of the gaming machine, which traditionally only included wager game capability. Instead, the UGA intercepts wager game video from existing gaming machines and combines the wager game video with video content from an external source to create a third video signal. The third video signal may include service window content and wager game content in various windows. A conventional UGA further includes one or more video outputs that support a standard video format, such as VGA or DVI. The video outputs may be sent to a standard monitor, such as a monitor on the existing gaming machines via a wire harness, such as a VGA cable. Because the mixing of service window and wager game content is performed at the video signal level, the circuitry controlling the functioning of wager games on the existing gaming machine is substantially unaltered. New service window content may be integrated while preserving the wager games' behavior and integrity.

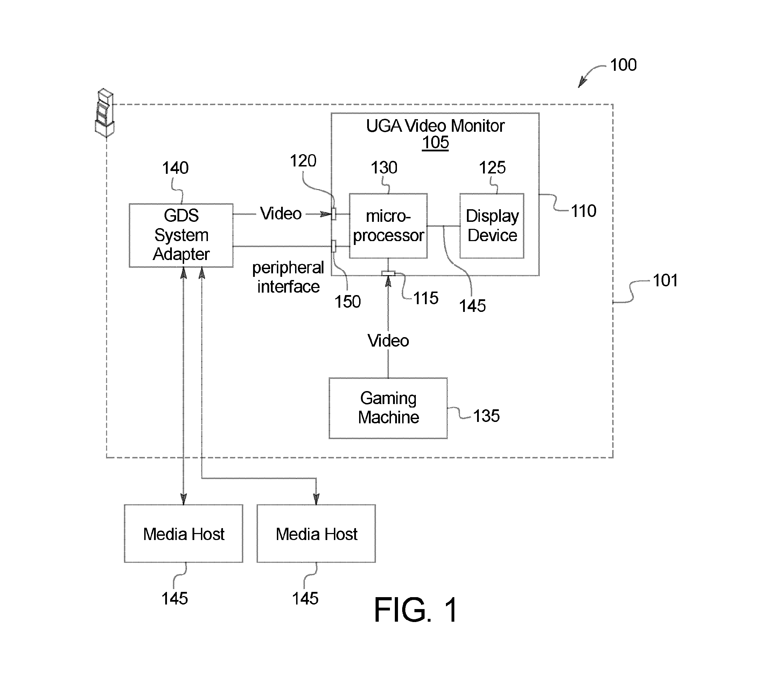

Figure 1 shows an example of a system 100 including a UGA Capable Display 105 (or "video monitor ") including a chassis 110 at least partially enclosing one or more microprocessors 130 and a display device 125. The video monitor 105 combines video data provided by an electronic gaming machine 135 (or "gaming machine") with video data provided by an external source (e.g., a GDS System adapter 140 or "computing device") to form a composite display screen image. The composite display screen image is displayed on the display device 125. The video monitor, the GDS system adapter, and the gaming machine may all be located within a gaming machine main cabinet 101.

In some implementations, the gaming machine 135 may generate video data associated with a wager game. The video data generated by the gaming machine may include game outcomes, game graphics, video sequences, credit balances, or any other information. The video data generated by the gaming machine may be sent to the video monitor and displayed on the display device in a "gaming window." The gaming window may take up the entire display device or a portion of the display device. In some implementations, the video monitor includes a gaming window video input 115 configured to receive the gaming window video signal sent by the gaming machine.

In some implementations, the video monitor may be configured to display video data received from an external source (i.e. a source that is not the gaming machine) on at least a portion of the display device. The external source may provide video data for the service window, or a plurality of service windows. The video monitor may include a service window video input 120 configured to receive the video data for the service window. As discussed, the service window may provide information such as player tracking account data, service request interfaces, food and beverage ordering interfaces, side games, or advertisements. However, these are merely examples of services and capabilities that may be provided in the service window. Those of skill in the art will appreciate the any service that a gaming establishment may provide to patrons may be implemented via the service window.

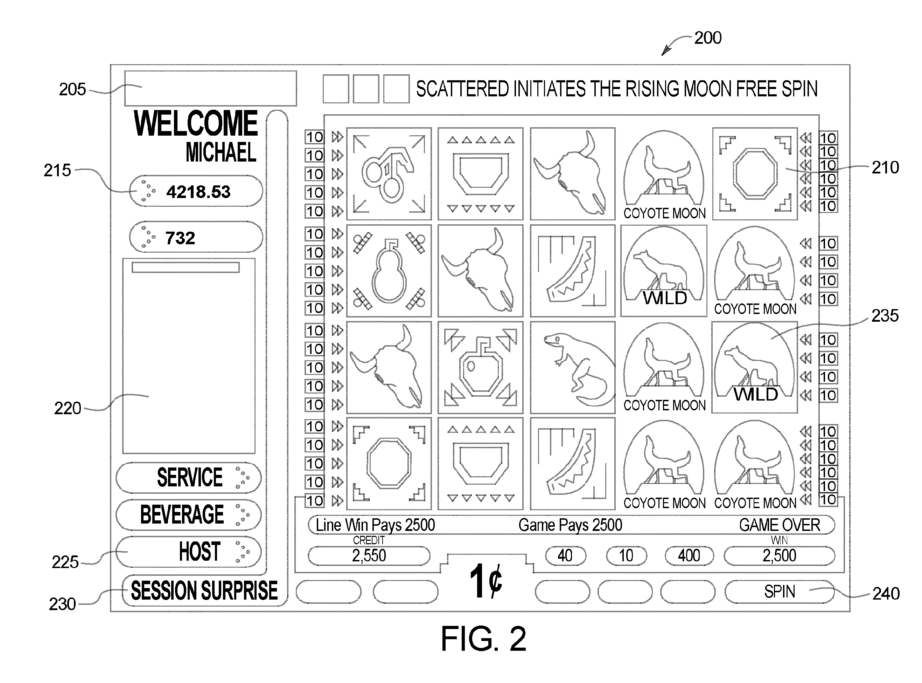

Figure 2 shows an example display screen 200 including a service window 205 and a gaming window 210. Generally, the portion of the display device not occupied by the gaming window is occupied by one or more service windows. The service window 205 includes an example display of service window data including player tracking data 215, an advertisement 220, service request interfaces 225, and a bonus game or side game interface 230. While Figure 2 shows a single service window, the service window data may be displayed on more than one service window as may be desirable to a person of skill in the art. The gaming window 210 includes a display of data associated with a wager game such as the video slots 235 as well as a user interface 240 for interaction with the wager game. Both the gaming window and the service window may be hereinafter referred to as picture-in-picture (PIP) windows.

Service window technology in gaming machines are further described in the following references, which are incorporated herein by reference and in their entirety: U.S. application no. 11/595,774, filed on November 10, 2006 (Attorney docket. No. IGT1 P334/P001121-013), naming LeMay, et al. as inventors, and titled, "Method and Apparatus for Integrating Remotely-Hosted and Locally Rendered Content on a Gaming Device;" U.S. application no. 11/426,165, filed on April 10, 2006 (Attorney docket. No. IGT1 P334X3/P001121-004), naming LeMay, et al. as inventors, and titled, "Presentation of Remotely-hosted and Locally Rendered Content for Gaming Systems;" U.S. application no. 11/682,253, filed on March 05, 2007 (Attorney docket. No. IGT1P270), naming lddings as inventor, and titled, "Casino Gaming Incentives Using Game Themes, Paytables, Denominations;" U.S. application no. 12/209,608, filed on September 12, 2008 (Attorney docket. No. IGT1 P334X5/P001286-002), naming Weber, et al. as inventors, and titled, "Gaming Machine with Externally Controlled Content Display;" U.S. application no. 11/983,770, filed on November 09, 2011 (Attorney docket. No. IGT1 P334X6/P001204-027), naming Williams, et al. as inventors, and titled, "Multilayer Display 3d Server Based Portals;" U.S. application no. 12/120,191, filed on May 13, 2008 (Attorney docket. No. IGT1 P334X7/P001349-001), naming Weber, et al. as inventors, and titled, "Methods and Systems for Tracking an Event of an Externally Controlled Interface;" U.S. application no. 12/435,962, filed on May 05, 2009 (Attorney docket. No. IGT1 P334X8/P001353-002), naming Weber, et al. as inventors, and titled, "Methods and Systems for Interfacing with a Third-Party Application;" and U.S. application no. 11/595,798, filed on November 10, 2006 (Attorney docket. No. IGT1 P337/P001121-012), naming Little, et al. as inventors, and titled, "Remote Content Management and Resource Sharing on a Gaming Machine and Method of Implementing Same;" U.S. application no. 11/827,060, filed on July 09, 2007 (Attorney docket. No. IGT1 P337A/P001121-019), naming Graham, et al. as inventors, and titled, "Integrating Remotely-hosted and Locally Rendered Content on a Gaming device."

Returning to Figure 1, the external source providing service window content may be the GDS system adapter 140. The GDS system adapter may include a network device (not shown) configured to receive content from one or more media hosts 145. In some implementations, the content for service windows is generated by the one or more media hosts. The GDS system adapter may receive the content generated by the one or more media hosts. The GDS system adapter may further include a processing device (e.g., a service window microprocessor) for interpreting the content and converting the content into the service window video signal. The GDS adapter may further include a system adapter video output configured to send the service window video signal to the service window video input 120 of the video monitor. Those of skill in the art will appreciate that the GDS system adapter is only one example of an external host. For instance, the service window video signal may be fed into the video monitor directly from the one or more media hosts or some other computing device appropriately configured.

In some implementations, the one or more microprocessors 130 of the video monitor may be configured to receive the gaming window video signal and the service window video signal and create a third video signal 145. The third video signal may include display data for the composite display screen image, such as the example display screen 200 shown in Figure 2. The composite display screen image may include the service window, the gaming window, or a combination of the service window and the gaming window. The third video signal may be sent to the display device 125 for display.

In some implementations, the GDS system adapter may transmit instructions to the video monitor for the creation of the third video signal. The one or more microprocessors of the video monitor may be configured to receive the instructions via a peripheral interface 150. In some implementations, the instructions use a standard communication protocol, such as the Gaming Device Standard (GDS) protocol provided by the Gaming Standards Association (GSA). The instructions may include, but are not limited to: closing a PIP window, opening PIP window, resizing a PIP window, moving a PIP window, assigning the full display device screen to the service window, assigning the full display device screen to the gaming window, displaying the service window at an existing PIP window, display the gaming window at an existing PIP window, manipulation of the Z-ordering (in an X, Y, and Z computer graphics ordering system) of windows such that the gaming window is displayed above or below the service window, and manipulation of the X-ordering or Y-ordering of windows.

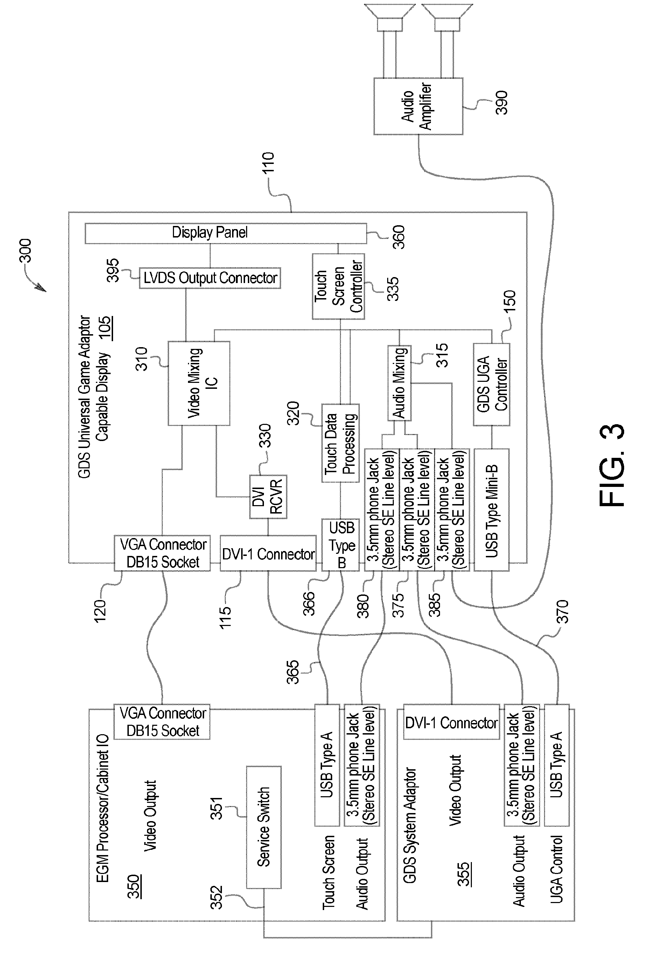

Figure 3 shows an example of a gaming machine 300 including the video monitor 105 with video mixing, audio mixing, and touch screen capabilities, configured according to some implementations. The depicted components of Figure 3 are typically enclosed within a gaming machine cabinet (not shown in the figure). The depicted components of video monitor 105 are typically enclosed within their own chassis. In other words, the video monitor 105 is typically a single movable/installable physical unit. In Figure 3, the one or more microprocessors 130 in Figure 1 are shown as discrete devices performing different processing functions. For instance, the video monitor 105 may include a video mixing IC 310 for mixing the service window video signal with the gaming window video signal to create the third video signal, an audio mixing IC 315 for mixing a service window audio signal with a gaming window audio signal to create a third audio signal, a touch data processing IC 320 for receiving touch screen data from a touch screen device 335 and routing the touch screen data to the gaming machine 350 or the system adapter 355, a video format converter 330 for converting video inputs into a format suitable for mixing by the video mixing IC, and the peripheral interface 150 for receiving instructions from the system adapter for creating the third video signal and third audio signal. Those of skill in the art will appreciate that any function performed by the processing devices shown in Figure 3 may be performed by a single physical processor or a plurality of physical processors.

In some implementations, the video monitor 105 may include the touch screen device 335 for providing user interaction with the gaming window or the service window. The touch screen device may be coupled with the display device screen 360, and may include a touch screen controller and a touch screen panel. The touch screen controller may be configured to receive touch screen data when a user of the gaming device touches a portion of the touch screen panel. The touch data processing IC 320 may be configured to receive the touch screen data and to receive PIP window data from the video mixing IC. The touch data processing IC may use this information to determine whether the touch screen data corresponds with the gaming window or the service window.

If the touch data processing IC determines that the touch screen data corresponds with the gaming window, it may send the touch screen data to the gaming machine via the connection 365. While a universal serial bus (USB) connection is shown in Figure 3, the connection 365 may use any data transfer mechanism or communication interface. If the one or more microprocessors determine that the touch screen data corresponds with the service window, the touch screen data may be sent to the GDS system adapter. In some implementations, the touch screen data may be sent to the GDS system adapter via the peripheral interface 150, which is referred to as the "GDS UGA Controller" in Figure 3. The peripheral interface may send the touch screen data to the GDS system adapter using a standard communication protocol, such as the GDS protocol. In some implementations, the touch screen data may be sent to the GDS system adapter using the same physical communication link as the data for the instructions from the GDS system adapter, such as a USB connection 370 shown in Figure 3. While a USB connection is shown in Figure 3, other communication interfaces are possible such as a serial communication interface, a SATA interface, a PATA interface, a SCSI interface, or any other communication interface.

In some implementations, the video monitor may include a service window audio input 375, a gaming window audio input 380, and an audio output 385. The service window audio input may be configured to receive audio data associated with one or more service windows from the GDS system adapter. The gaming window audio input may be configured to receive audio data associated with the gaming window from the gaming machine. The audio mixing IC may be configured to create a third audio signal from the gaming window audio with the service window audio. The third audio signal may include the gaming window audio, the service window audio, or a mixed combination of both (e.g., at various volumes). In some implementations, the third audio signal is mixed based on instructions from the GDS system adapter that may be sent to the video monitor via the peripheral interface. The third audio signal may be sent to an audio amplifier 390 (or "audio device") via the audio output 385.

In some implementations, the video monitor includes one or more video format converters, such as the video format converter 330 shown in Figure 3 (or "DVI RCVR"). The video format converter may convert a video signal in a first format into a second format so that the video mixing IC may perform the mixing. While the implementations shown in Figure 3 shows a video monitor wherein the mixing IC is configured to use a VGA signal, those of skill in the art will appreciate that the video mixing IC may be configured to use any video format and that the video monitor may include one or more video format converters as needed to prepare the gaming window video signal or the service window video signal for mixing.

In some implementations, techniques described herein may facilitate the integration of service windows on gaming machines lacking native service window capability without requiring significant alteration to the gaming machine game hardware or software. This is highly desirable in the gaming industry where the hardware and software responsible for providing wager games is regulated and where modifications may require regulatory approval before commercial use. In some implementations, the disclosed subject matter may allow a gaming establishment to implement new services on gaming machines without passing another round of regulatory approval. For example, the externally-provided content (e.g., from the one or more media hosts) may be displayed on the video monitor without requiring the gaming machine game software to be altered to include specialized software (e.g., an Adobe® Flash® player, a Microsoft® Silverlight® player) dedicated to executing the externally-provided content. Instead, the specialized software may be contained in the GDS system adapter. The GDS adapter may interface with one or more media hosts that provide the service window content. The GDS system adapter may send the video output for the externally-provided content as the service window video signal to the video monitor.

In another example, the video monitor may provide for the control of PIP windows without requiring the gaming machine game software to be altered to interface with service window controls. Instead, the video monitor may receive the instructions for creating the third video or audio signal from the GDS system adapter. The video monitor and GDS system adapter may be configured to use a communication protocol, such as the Gaming Device Standards (GDS) protocol of the Gaming Standards Association (GSA). In some implementations, the GDS system adapter may be provided by a third party and the video monitor is configured to understand the communication protocol used by the GDS system adapter.

In another example, certain instructions ("service switch instructions") for creating the third video or audio signal may originate from some other source, such as a service switch 351on the gaming machine 350. For instance, the service switch may be a button on the gaming machine that the user may press which opens up a service window for requesting services. The video monitor may include a "service switch input" for receiving the service switch instructions. In some implementations, the service switch instruction may be transmitted to the GDS system adapter via a connection 352. In another example, the service switch instructions are routed through a dedicated input on the video monitor ("service switch input"), which sends the service switch instructions to the GDS system adapter. The GDS system adapter may use the service switch instructions as a trigger for sending instructions to the video monitor via the peripheral interface 150.

Once received at the video monitor, the service switch instructions may be routed to the video mixing IC 310 for creating the third video or audio signal, e.g., opening up a service window. The peripheral interface may also request service window content to be displayed in the service window, such as content for requesting casino services, from the GDS system adapter.

In some implementations, both the gaming machine and the GDS system adapter may output video signals in a standard display format such as VGA, DVI, HDMI, etc. Therefore, the video monitor may also be configured to receive video signals in the standard display formats. The video monitor may include standard display ports (e.g., VGA connector DB15 socket for service window video input 120 or DVI-I connector for gaming window video input 115, as shown in Figure 2) that physically connect to the gaming machine and GDS system adapter using video harnesses or wire harnesses (e.g., a VGA cable).

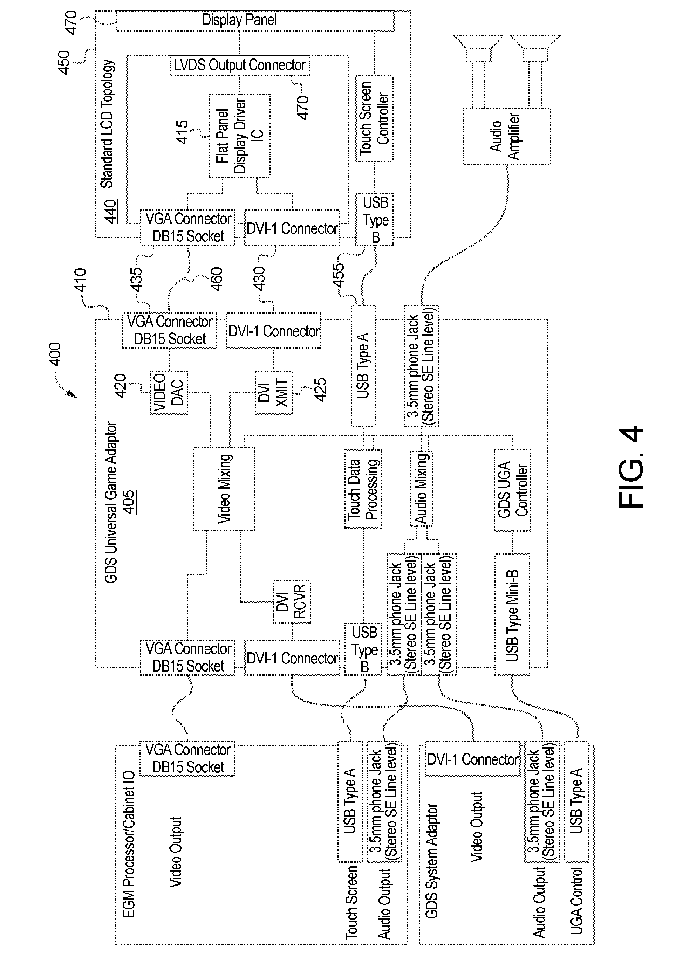

In the example shown in Figure 3, the display device may be a LCD panel including a receiver for low voltage differential signals (LVDS) such as LVDS output converter 395. The third video signal mixed by the video mixing IC may be configured to be directly sent to the LVDS output converter without being converted to a different video format. However, other configurations may be desirable for upgrading gaming machines with existing display devices. Figure 4 shows an example of conventional gaming machine architecture 400 wherein the video mixing capabilities are separated from the display device. As shown in Figure 4, the video mixing capabilities are provided by a universal gaming adapter 405 which is similar to the video monitor 105 shown in Figure 3. However, separate from the universal gaming adapter 405 in a chassis 410 is a monitor 440 in a chassis 450. In some implementations, the monitor 440 may be a standard LCD monitor with one or more standard display input ports and touch screen capability. The monitor 440 may include a display panel 470, a LVDS output converter 475, a flat panel display driver IC 415, and a touch screen controller 480. The flat panel display driver IC 415 is configured to convert a standard display format video received by the monitor into a format compatible with the LVDS output converter 475.

The universal gaming adapter 405 may be configured to send the third video signal to the monitor 440 and to receive touch screen data from the monitor 440. To support this functionality, the universal gaming adapter 405 and the monitor 440 may both include one or more standard display ports 435 and 430 for carrying the third video signal and USB ports 455 for carrying the touch screen data. In Figure 4, the monitor 440 includes VGA and DVI standard display ports. The standard display ports may be connected with a wire or video harness, such as a VGA cable 460.

To support the various standard display formats that a pre-existing gaming machine monitor may require, the universal gaming adapter may include devices for converting the third video signal. Figure 4 shows a VGA converter 420 and a DVI converter 425 for converting the third video signal. Those of skill in the art will appreciate that the third video signal may be converter to any format accepted by the receiver of the monitor by using the appropriate converters and standard display ports.

The implementation shown in Figure 3 (Universal Game Adapter (UGA) Capable Display) is advantageous to the implementation in Figure 4 (UGA separate from the display) insofar as the costs and space required are reduced. For instance, the VGA converter 420, the DVI converter 425, the one or more standard display ports 435 and 430, the wire harness 460, the USB ports 455 and associated USB cable, the chassis 450, and the flat panel display driver IC 415 are not required in the implementation shown in Figure 3. In Figure 3, the third video signal is not converted to a standard display format in the universal game adapter and then converted back into a LVDS compatible format in the monitor by the flat panel display driver IC 415. Instead, the third video signal is kept in a LVDS compatible format and sent directly to the LVDS output controller 395.

While Figures 3 and 4 show LVDS compatible display devices, those of skill in the art will appreciate that other types of signals and receivers may be used to drive the display devices. In some implementations, the video monitor of Figure 3 may be configured to keep the third video signal in whatever format is accepted by the display device to drive the display panel. Examples of other formats may include DisplayPort, HDMI, FPD link, DVI, VGA, or CVBS.

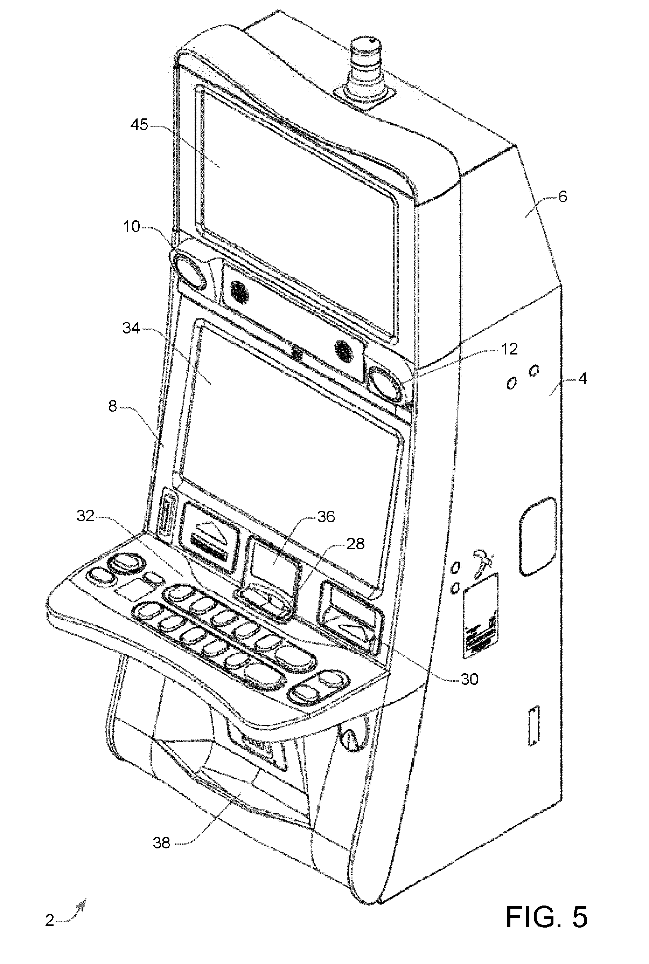

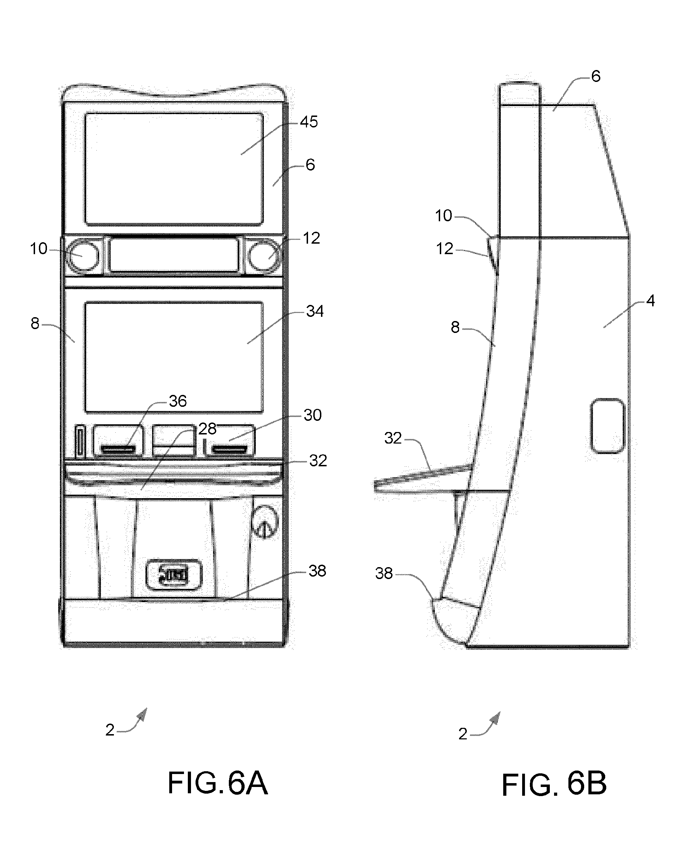

Figures 5, 6A, and 6B show perspective diagrams of an example of a gaming machine 2, configured in accordance with some implementations. As illustrated in Figures 5, 6A, and 6B, gaming machine 2 includes a gaming machine main cabinet 4, which generally surrounds the machine interior and is viewable by users. The main cabinet includes a main door 8 on the front of the machine, which opens to provide access to the interior of the machine.

In some implementations, the gaming machine may include any of a plurality of devices. For example, the gaming machine may include a ticket printer that prints bar-coded tickets, a key pad for entering player tracking information, a display 34, a card reader for entering a magnetic striped card containing player tracking information, and any other devices. The ticket printer may be used to print tickets for a cashless ticketing system. In Figures 5, 6A, and 6B, attached to the main door is a payment acceptor 28, a bill validator 30, and a coin tray 38. The payment acceptor may include a coin slot and/or a payment, note, or bill acceptor, where the player inserts money, coins, tokens, or other types of payments.

In some implementations, devices such as readers or validators for credit cards, debit cards, smart cards, or credit slips may facilitate payment. For example, a player may insert an identification card into a card reader of the gaming machine. The identification card may be a smart card coded with a player's identification, credit totals (or related data) and other relevant information. As another example, a player may carry a portable device, such as a cell phone, a radio frequency identification tag or any other suitable wireless device. The portable device may communicates a player's identification, credit totals (or related data), and/or any other relevant information to the gaming machine. As yet another example, money may be transferred to a gaming machine through electronic funds transfer. When a player funds the gaming machine, a logic device coupled to the gaming machine may determine the amount of funds entered and display the corresponding amount on a display device.

In some implementations, attached to the main door is a plurality of player-input switches or buttons 32. The input switches can include any suitable devices which enables the player to produce an input signal which is received by the processor. The input switches may include a game activation device that may be used by the player to start any primary game or sequence of events in the gaming machine. The game activation device can be any suitable play activator such as a "bet one" button, a "max bet" button, or a "repeat the bet" button. In some instances, upon appropriate funding, the gaming machine may begin the game play automatically. Alternately, the gaming machine may automatically activate game play after detecting user input via the game activation device.

In some implementations, one input switch is a cash-out button. The player may push the cash-out button and cash out to receive a cash payment or other suitable form of payment corresponding to the number of remaining credits. For example, when the player cashes out, the player may receive the coins or tokens in a coin payout tray. As another example, the player may receive other payout mechanisms such as tickets or credit slips redeemable by a cashier (or other suitable redemption system) or funding to the player's electronically recordable identification card. As yet another example, funds may be transferred from the gaming machine to the player's smart card.

In some implementations, one input switch is a touch-screen coupled with a touch-screen controller, or some other touch-sensitive display overlay to enable for player interaction with the images on the display. The touch-screen and the touch-screen controller may be connected to a video controller. A player may make decisions and input signals into the gaming machine by touching the touch-screen at the appropriate places. One such input switch is a touch-screen button panel.

In some implementations, the gaming machine may include communication ports for enabling communication of the gaming machine processor with external peripherals, such as external video sources, expansion buses, game or other displays, a SATA port, a key pad, or a network interface for communicating via a network.

In some implementations, the electronic gaming machine may include one or more display devices. For example, the electronic gaming machine 2 includes a display device 34 and an information panel 36. The display device 34 and the information panel 36 may each include any of a cathode ray tube, an LCD, a light emitting diode (LED) based display, an organic light emitting diode (OLED) based display, a polymer light emitting diode (PLED) based display, an SED based-display, an E-ink display, a plasma display, a multilayer display, a television display, a display including a projected and/or reflected image, or any other suitable electronic display device.

In some implementations, the display devices at the gaming machine may include one or more electromechanical devices such as one or more rotatable wheels, reels, or dice. The display device may include an electromechanical device adjacent to a video display, such as a video display positioned in front of a mechanical reel. The display devices may include dual-layered or multi-layered electromechanical and/or video displays that cooperate to generate one or more images. The display devices may be of any suitable size and configuration, such as a square, a rectangle or an elongated rectangle.

In some implementations, the display devices of the gaming machine are configured to display game images, service window images, or other suitable images. The images may include symbols, game indicia, people, characters, places, things, faces of cards, dice, and any other images. The images may include a visual representation or exhibition of the movement of objects such as mechanical, virtual, or video reels and wheel. The images may include a visual representation or exhibition of dynamic lighting, video images, or any other images.

In some implementations, the electronic gaming machine may include a top box. For example, the gaming machine 2 includes a top box 6, which sits on top of the main cabinet 4. The top box 6 may house any of a number of devices, which may be used to add features to a game being played on the gaming machine 2. These devices may include speakers 10 and 12, display device 45, and any other devices. Further, the top box 6 may house different or additional devices not illustrated in Figures 5, 6A, and 6B. For example, the top box may include a bonus wheel or a back-lit silk screened panel which may be used to add bonus features to the game being played on the gaming machine. As another example, the top box may include a display for a progressive jackpot offered on the gaming machine. As yet another example, the top box may include a smart card interaction device. During a game, these devices are controlled and powered, at least in part, by circuitry (e.g. a master gaming controller) housed within the main cabinet 4 of the gaming machine 2.

In some implementations, speakers (or an "audio device") may be mounted and situated in the cabinet with an angled orientation toward the player. For instance, the speakers 10 and 12 located in top box area 6 of the upper region of gaming machine 2 may be mounted and situated in the cabinet with an angled orientation down towards the player and the floor. In one example, the angle is 45 degrees with respect to the vertical, longitudinal axis of machine 2. In another example, the angle is in a range of 30-60 degrees. In another example, the angle is any angle between 0 and 90 degrees. In some implementations, the angle of speakers in the gaming machine may be adjustable. For instance, speakers may be adjusted to face in a direction more closely approximating an estimated position of a player's head or facial features.

The bill validator 30, player-input switches 32, display screen 34, and other gaming devices may be used to present a game on the game machine 2. The devices may be controlled by code executed by a master gaming controller housed inside the main cabinet 4 of the machine 2. The master gaming controller may include one or more processors including general purpose and specialized processors, such as graphics cards, and one or more memory devices including volatile and non-volatile memory. The master gaming controller may periodically configure and/or authenticate the code executed on the gaming machine.

In some implementations, the gaming machine may include a sound generating device coupled to one or more sounds cards. The sound generating device may include one or more speakers or other sound generating hardware and/or software for generating sounds, such as playing music for the primary and/or secondary game or for other modes of the gaming machine, such as an attract mode. The gaming machine may provide dynamic sounds coupled with attractive multimedia images displayed on one or more of the display devices to provide an audio-visual representation or to otherwise display full-motion video with sound to attract players to the gaming machine. During idle periods, the gaming machine may display a sequence of audio and/or visual attraction messages to attract potential players to the gaming machine. The videos may also be customized for or to provide any appropriate information.

In some implementations, the gaming machine may include a sensor, such as a camera that is selectively positioned to acquire an image of a player actively using the gaming machine and/or the surrounding area of the gaming machine. The sensor may be configured to capture biometric data about a player in proximity to the gaming machine. The biometric data may be used to implement mechanical and/or digital adjustments to the gaming machine. Alternately, or additionally, the sensor may be configured to selectively acquire still or moving (e.g., video) images. The display devices may be configured to display the image acquired by the camera as well as display the visible manifestation of the game in split screen or picture-in-picture fashion. For example, the camera may acquire an image of the player and the processor may incorporate that image into the primary and/or secondary game as a game image, symbol, animated avatar, or game indicia.

Gaming machine 2 is but one example from a wide range of gaming machine designs on which the techniques described herein may be implemented. For example, not all suitable gaming machines have top boxes or player tracking features. Further, some gaming machines have only a single game display - mechanical or video, while others may have multiple displays.

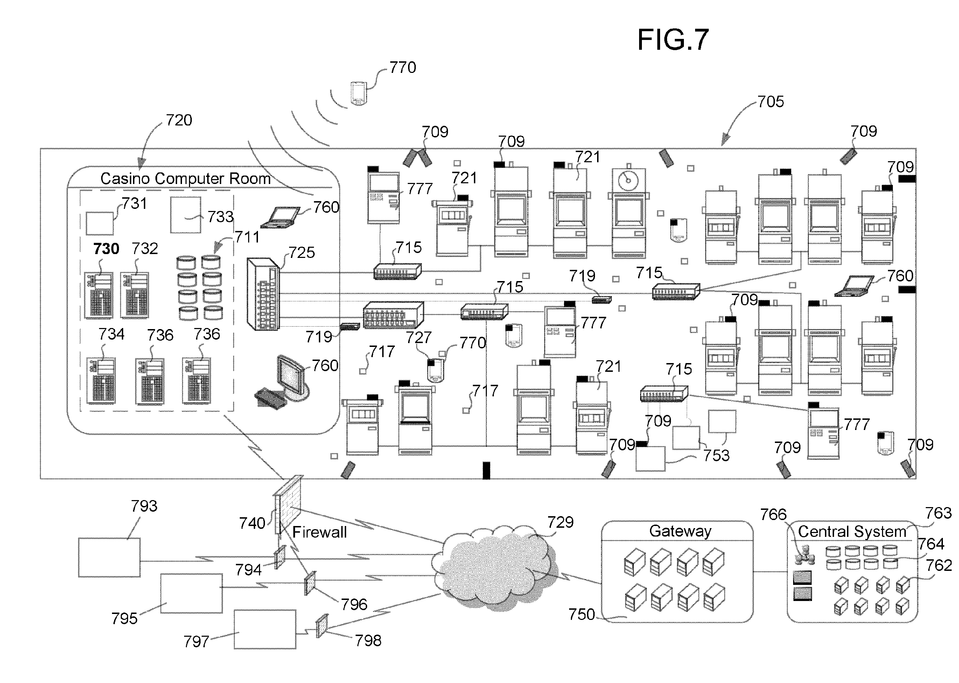

Figure 7 shows a server-based (sb™) gaming network, configured in accordance with some implementations. Those of skill in the art will appreciate that this architecture and the related functionality are merely examples and that the present disclosure encompasses many other such embodiments and methods.

Here, casino computer room 720 and networked devices of a gaming establishment 705 are illustrated. Gaming establishment 705 is configured for communication with central system 763 via gateway 750. Gaming establishments 793 and 795 are also configured for communication with central system 763.

In some implementations, gaming establishments may be configured for communication with one another. In this example, gaming establishments 793 and 795 are configured for communication with casino computer room 720. Such a configuration may allow devices and/or operators in casino 705 to communicate with and/or control devices in other casinos. In some such implementations, a server in computer room 720 may control devices in casino 705 and devices in other gaming establishments. Conversely, devices and/or operators in another gaming establishment may communicate with and/or control devices in casino 705.

For example, a server of casino 705 or central system 763 may be provisioned with relatively more advanced software (e.g., 3-D facial recognition software) for patron identification than servers of other networked locations. Such a server may process patron identification requests from devices in casino 705 as well as patron identification requests from devices in gaming establishments 793 and 795.

Here, gaming establishment 797 is configured for communication with central system 763, but is not configured for communication with other gaming establishments. Some gaming establishments (not shown) may not be in communication with other gaming establishments or with a central system. Gaming establishment 705 includes multiple gaming machines 721, each of which is part of a bank 710 of gaming machines 721. In this example, gaming establishment 705 also includes a bank of networked gaming tables 753. However, the present disclosure may be implemented in gaming establishments having any number of gaming machines, gaming tables, etc. It will be appreciated that many gaming establishments include hundreds or even thousands of gaming machines 721 and/or gaming tables 753, not all of which are necessarily included in a bank and some of which may not be connected to a network. At least some of gaming machines 721 and/or mobile devices 770 may be "thin clients" that are configured to perform client-side methods as described elsewhere herein.

Some configurations can provide automated, multi-player roulette, blackjack, baccarat, and other table games. The table games may be conducted by a dealer and/or by using some form of automation, which may include an automated roulette wheel, an electronic representation of a dealer, etc. In some such implementations, devices such as cameras, radio frequency identification devices, etc., may be used to identify and/or track playing cards, chips, etc. Some of gaming tables 753 may be configured for communication with individual player terminals (not shown), which may be configured to accept bets, present an electronic representation of a dealer, indicate game outcomes, etc.

Gaming establishment 705 also includes networked kiosks 777. Depending on the implementation, kiosks 777 may be used for various purposes, including but not limited to cashing out, prize redemption, redeeming points from a player loyalty program, redeeming "cashless" indicia such as bonus tickets, smart cards, etc. In some implementations, kiosks 777 may be used for obtaining information about the gaming establishment, e.g., regarding scheduled events (such as tournaments, entertainment, etc.), regarding a patron's location, etc. Software related to such features may be provided and/or controlled, and related data may be obtained and/or provided, according to the present disclosure. For example, in some implementations of the disclosure, kiosks 777 may be configured to receive information from a patron, e.g., by presenting graphical user interfaces.

In this example, each bank 710 has a corresponding switch 715, which may be a conventional bank switch in some implementations. Each switch 715 is configured for communication with one or more devices in computer room 720 via main network device 725, which combines switching and routing functionality in this example. Although various communication protocols may be used, some preferred implementations use the Gaming Standards Association's G2S Message Protocol. Other implementations may use the open, Ethernet-based SuperSAS® protocol, which is available from IGT. Still other protocols, including but not limited to Best of Breed ("BOB"), may be used to implement various embodiments of the disclosure. IGT has also developed a gaming-industry-specific transport layer called CASH that rides on top of TCP/IP and offers additional functionality and security.

Here, gaming establishment 705 also includes an RFID network, implemented in part by RFID switches 719 and multiple RFID readers 717. An RFID network may be used, for example, to track objects (such as mobile gaming devices 770, which include RFID tags 727 in this example), patrons, etc., in the vicinity of gaming establishment 705.

As noted elsewhere herein, some implementations of the disclosure may involve "smart" player loyalty instruments, such as player tracking cards, which include an RFID tag. Accordingly, the location of such RFID-enabled player loyalty instruments may be tracked via the RFID network. In this example, at least some of mobile devices 770 may include an RFID tag 727, which includes encoded identification information for the mobile device 770. Accordingly, the locations of such tagged mobile devices 770 may be tracked via the RFID network in gaming establishment 705. Other location-detection devices and systems, such as the global positioning system ("GPS"), may be used to monitor the location of people and/or devices in the vicinity of gaming establishment 705 or elsewhere.

Various alternative network topologies can be used to implement different embodiments of the disclosure and/or to accommodate varying numbers of networked devices. For example, gaming establishments with large numbers of gaming machines 721 may require multiple instances of some network devices (e.g., of main network device 725, which combines switching and routing functionality in this example) and/or the inclusion of other network devices not shown in Figure 7. Some implementations of the disclosure may include one or more middleware servers disposed between kiosks 777, RFID switches 719 and/or bank switches 715 and one or more devices in computer room 720 (e.g., a corresponding server). Such middleware servers can provide various useful functions, including but not limited to the filtering and/or aggregation of data received from switches, from individual gaming machines and from other devices. Some implementations of the disclosure include load-balancing methods and devices for managing network traffic.

Storage devices 711, sb™ server 730, License Manager 731, Arbiter 733, servers 732, 734, 736 and 738, host device(s) 760 and main network device 725 are disposed within computer room 720 of gaming establishment 705. In practice, more or fewer devices may be used. Depending on the implementation, some such devices may reside in gaming establishment 705 or elsewhere.

One or more devices in central system 763 may also be configured to perform, at least in part, tasks specific to the present disclosure. For example, one or more servers 762, arbiter 733, storage devices 764 and/or media host devices 760 of central system 763 may be configured to implement the functions described in detail elsewhere herein. These functions may include, but are not limited to, providing functionality for devices such as wager gaming machines 721, mobile devices 770, etc.

One or more of the servers of computer room 720 may be configured with software for receiving a player's wager gaming notification parameters, determining when a wagering condition corresponds with the wager gaming notification parameters and/or providing a notification to the player when the wagering condition corresponds with the wager gaming notification parameters. Moreover, one or more of the servers may be configured to receive, process and/or provide image data from cameras 709, to provide navigation data to patrons (e.g., to indicate the location of and/or directions to a gaming table, a wager gaming machine, etc., associated with a wager gaming notification), etc.

For example, navigation data (which may include map data, casino layout data, camera image data, etc.) may be provided by one or more of the servers of computer room 720 to mobile devices 770. Some implementations of the present disclosure include a plurality of networked cameras 709, which may be video cameras, smart cameras, digital still cameras, etc. In some such implementations, such cameras may provide, at least in part, real-time navigation.

Other devices that may be deployed in network 705 do not appear in Figure 7. For example, some gaming networks may include not only various radio frequency identification ("RFID") readers 717, but also RFID switches, middleware servers, etc., some of which are not depicted in Figure 7. These features may provide various functions. For example, a server (or another device) may determine a location of a mobile device 770 according to the location of an RFID reader that reads an RFID tag 727.

The servers and other devices indicated in Figure 7 may be configured for communication with other devices in or outside of gaming establishment 705, such as host devices 760, kiosks 777 and/or mobile devices 770, for implementing some methods described elsewhere herein. Servers (or the like) may facilitate communications with such devices, receive and store patron data, provide appropriate responses, etc., as described elsewhere herein.

Some of these servers may be configured to perform tasks relating to accounting, player loyalty, bonusing/progressives, configuration of gaming machines, etc. One or more such devices may be used to implement a casino management system, such as the IGT Advantage™ Casino System suite of applications, which provides instantaneous information that may be used for decision-making by casino managers. A Radius server and/or a DHCP server may also be configured for communication with the gaming network. Some implementations of the disclosure provide one or more of these servers in the form of blade servers.

Some embodiments of sb™ server 730 and the other servers shown in Figure 7 include (or are at least in communication with) clustered CPUs, redundant storage devices, including backup storage devices, switches, etc. Such storage devices may include a "RAID" (originally redundant array of inexpensive disks, now also known as redundant array of independent disks) array, back-up hard drives and/or tape drives, etc.

In some implementations of the disclosure, many of these devices (including but not limited to License Manager 731, servers 732, 734, 736, and 738, and main network device 725) are mounted in a single rack with sb™ server 730. Accordingly, many or all such devices will sometimes be referenced in the aggregate as an "sb™ server." However, in alternative implementations, one or more of these devices is in communication with sb™ server 730 and/or other devices of the network but located elsewhere. For example, some of the devices could be mounted in separate racks within computer room 720 or located elsewhere on the network. Moreover, it can be advantageous to store large volumes of data elsewhere via a storage area network ("SAN").

Computer room 720 may include one or more operator consoles or other host devices that are configured for communication with other devices within and outside of computer room 720. Such host devices may be provided with software, hardware and/or firmware for implementing various embodiments of the disclosure. However, such host devices need not be located within computer room 720. Wired host devices 760 (which are desktop and laptop computers in this example) and wireless devices 770 (which are mobile computing devices in this example) may be located elsewhere in gaming establishment 705 or at a remote location.

These and other aspects of the disclosure may be implemented by various types of hardware, software, firmware, etc. For example, some features of the disclosure may be implemented, at least in part, by machine-readable media that include program instructions, state information, etc., for performing various operations described herein. Examples of program instructions include both machine code, such as produced by a compiler, and files containing higher-level code that may be executed by the computer using an interpreter. Examples of machine-readable media include, but are not limited to, magnetic media such as hard disks, floppy disks, and magnetic tape; optical media such as CD-ROM disks; magneto-optical media; and hardware devices that are specially configured to store and perform program instructions, such as read-only memory devices ("ROM") and random access memory ("RAM").

Any of the above implementations may be used alone or together with one another in any combination. Although various implementations may have been motivated by various deficiencies with the prior art, which may be discussed or alluded to in one or more places in the specification, the implementations do not necessarily address any of these deficiencies. In other words, different implementations may address different deficiencies that may be discussed in the specification. Some implementations may only partially address some deficiencies or just one deficiency that may be discussed in the specification, and some implementations may not address any of these deficiencies.

While various implementations have been described herein, it should be understood that they have been presented by way of example only, and not limitation. Thus, the breadth and scope of the present application should not be limited by any of the implementations described herein, but should be defined only in accordance with the following and later-submitted claims and their equivalents.

It will be understood that unless features in any of the above-described implementations are expressly identified as incompatible with one another or the surrounding context implies that they are mutually exclusive and not readily combinable in a complementary and/or supportive sense, the totality of this disclosure contemplates and envisions that specific features of those implementations can be selectively combined to provide one or more comprehensive, but slightly different, technical solutions. It will therefore be further appreciated that the above description has been given by way of example only and that modifications in detail may be made within the scope of the invention.

## Claims

1. A video monitor for use in a gaming machine capable of presenting a service window providing user interactive content from a casino or other operator, the video monitor comprising:
a chassis at least partially enclosing:
a display device including a receiver configured to receive a video signal in a first format;
a service window video input configured to receive a service window video signal including display data for a service window from a computing device;
a gaming window video input configured to receive a gaming window video signal including display data for a gaming window from the gaming machine;
a peripheral interface communicatively coupled with the computing device;
and
one or more microprocessors, the one or more microprocessors being communicatively coupled with the display device, the service window video input, the gaming window video input, and the peripheral interface,
and wherein the one or more microprocessors are configured to:
receive the service window video signal from the first video input,
receive the gaming window video signal from the second video input,
receive service window instructions via the peripheral interface from the computing device, the service window instructions providing for the creation of a third video signal, the third video signal including display data for the service window, the gaming window, or a combination of the service window and the gaming window,
create the third video signal based on the service window instructions, wherein the third video signal is in the first format, and
send the third video signal to the display device via the receiver without converting the third video signal into a second format.

2. The video monitor of claim 1, wherein the chassis further at least partially encloses:
a service window audio input configured to receive a service window audio signal from the computing device, the service window audio signal including service window audio;
a gaming window audio input configured to receive a gaming window audio signal from the gaming machine, the gaming window audio signal including gaming window audio; and
an audio output.

3. The video monitor of claim 2, wherein the one or more microprocessors are communicatively coupled with the service window audio input, the gaming window audio input, and the audio output, and further configured to:
receive the service window audio signal from the service window audio input,
receive the gaming window audio signal from the gaming window audio input,
receive the service window instructions via the peripheral interface from the computing device providing for the creation of a third audio signal, the third audio signal including the service window audio, the gaming window audio, or a mixed combination of both,
create the third audio signal based on the service window instructions, and
send the third audio signal to an audio device via the audio output.

4. The video monitor of claim 3, wherein the chassis further at least partially encloses:
a service switch input, the service switch input communicatively connected with an input device on the gaming machine; and
wherein the one or more microprocessors are communicatively connected with the service switch input, the one or more microprocessors further configured to:
receive service switch instructions from the service switch input,
and
send the service switch instructions to the computing device via the peripheral interface.

5. The video monitor of any of claims 1-4 , wherein the display device includes a touch screen, wherein the chassis further at least partially encloses a touch screen output communicatively coupled with the gaming machine and the computing device, and wherein the one or more processors are communicatively coupled with the touch screen and further configured to:
receive touch screen data from the touch screen;
determine whether the touch screen data corresponds with the service window or the gaming window;
responsive to determining that the touch screen data corresponds with the service window, send the touch screen data to the computing device via the touch screen output; and
responsive to determining that the touch screen data corresponds with the gaming window, send the touch screen data to the gaming machine via the touch screen output.

6. The video monitor of any of claims 1-5, wherein the peripheral interface utilizes a standard communication protocol.

7. The video monitor of any of claims 1-3, wherein the service window instructions indicate the opening, closing, creating, destroying, resizing, or moving of the service window.

8. The video monitor of claim 4, wherein the service switch instructions indicate the opening, closing, creating, destroying, resizing, or moving of the service window.

9. The video monitor of any of claims 1-8, wherein the one or more microprocessors are further configured to convert the service window video signal or the gaming window video signal into a format suitable for creating the third video signal.

10. The video monitor of any of claims 1-8, wherein the service window input is configured to receive the service window video signal from the computing device utilizing a first wire harness, the gaming window video input is configured to receive the gaming window video signal from the gaming machine utilizing a second wire harness, and the third video signal is sent to the display device without utilizing a wire harness.

11. A method for presenting a service window providing user interactive content from a casino or other operator utilizing a chassis at least partially enclosing: a display device including a receiver configured to receive a video signal in a first format, a service window video input configured to receive a service window video signal including display data for a service window from a computing device, a gaming window video input configured to receive a gaming window video signal including display data for a gaming window from a gaming machine, a peripheral interface communicatively coupled with the computing device, and one or more microprocessors, the method comprising:
receiving at the one or more microprocessors the service window video signal from the first video input;
receiving at the one or more microprocessors the gaming window video signal from the second video input;
receiving at the one or more microprocessors service window instructions via the peripheral interface from the computing device, the service window instructions providing for the creation of a third video signal, the third video signal including the service window, the gaming window, or a combination of the service window and the gaming window;
creating the third video signal based on the service window instructions,
wherein the third video signal is in the first format; and
sending the third video signal to the display device via the receiver without converting the third video signal into a second format.
